# FASCICULE DE BREVET EUROPEEN

(11) **EP 0 953 402 B1**
(45) Date de publication et mention de la délivrance du brevet: **13.08.2003**
(21) Numéro de dépôt: 99470013.6
(22) Date de dépôt: 30.04.1999
(51) Int. Cl.: B23P 19/02, B25B 27/02

(54) **Procédé et dispositif d'emmachement par pressage**
Verfahren und Vorrichtung zum Pressverbinden
Method and device for press-fitting

(30) Priorité: 30.04.1998 FR 9805767
(43) Date de publication de la demande: 03.11.1999
(73) Titulaire: Sarl Lormac Automation, 54640 Tucquegnieux (FR)
(72) Inventeur: Romano, Pascal, 54640 Tucquegneux (FR)
(74) Mandataire: Poupon, Michel

(56) Documents cités:
- EP-A- 0 723 837
- PATENT ABSTRACTS OF JAPAN vol. 009, no. 009 (P-327), 16 janvier 1985 (1985-01-16) -& JP 59 157523 A (NITSUTOU SEIKOU KK), 6 septembre 1984 (1984-09-06)
- PATENT ABSTRACTS OF JAPAN vol. 017, no. 059 (M-1363), 5 février 1993 (1993-02-05) -& JP 04 269128 A (SUZUKI MOTOR CORP), 25 septembre 1992 (1992-09-25)
- DATABASE WPI Section PQ, Week 8948 Derwent Publications Ltd., London, GB; Class P56, AN 89-354988 XP002088582 -& SU 1 481 019 A (PAVLODARSK FITTING), 23 mai 1989 (1989-05-23)

## Description

La présente invention se rapporte au domaine de l'emmanchement par pressage selon le préambule de la revendication 1 et aux outillages associés selon le préambule de la revendication 7, comme il est connu par example du document JP-A-59 157 523.

Depuis de nombreuses années maintenant, les industriels cherchent à automatiser au maximum toutes les opérations de fabrication et d'assemblage de pièces, de sous-ensembles et d'ensembles, afin d'améliorer la productivité et la qualité.

L'assemblage de deux pièces mécaniques à la presse est une des opérations les plus courantes dans l'industrie mécanique après l'assemblage par vissage.

C'est un type de liaison qui présente un potentiel d'automatisation important et plusieurs exemples de postes automatisés avec chargement de pièces existent dans des processus de fabrication en grande série, notamment dans l'industrie automobile.

La plupart de ces opérations d'emmanchement font appel à des montages très spécifiques aux pièces à assembler et restent souvent de conceptions très complexes. Le montage spécifique d'assemblage conditionne alors les différentes caractéristiques de l'emmanchement (efforts, tolérances, cotations...).

Le procédé selon l'invention permet d'emmancher des pièces mécaniques avec une très grande précision en simplifiant considérablement le principe de calcul, de mesure et de contrôle des cotes d'emmanchement à réaliser.

De plus, le dispositif réalisant le procédé selon l'invention est lui aussi très simple, adaptable sur tout type de presse déjà existante, et ne nécessite pas l'usage d'outillages spéciaux importants.

Jusqu'à présent, la mesure et le contrôle des cotes d'emmanchement étaient réalisés grâce à des vérins asservis.

La demande de brevet européen n° 723 837 présente en particulier une presse servant à ajuster par pressage horizontal un tube cylindrique dans un carter fixe. Le dispositif permet de calculer la profondeur d'insertion de l'extrémité libre du tube cylindrique grâce à un palpeur situé sur le vérin.

En outre, la société BOSCH a développé un système appelé "Bosch pressin" permettant de contrôler quantitativement la force d'emmanchement, de la comparer à chaque opération avec une courbe d'effort type, et de mesurer la course absolue du vérin asservi.

Tous ces dispositifs sont basés sur le même principe : la mesure et le contrôle de la côte d'emmanchement par rapport au déplacement du vérin.

Ce type d'opération induit un certain nombre d'erreurs, et nécessite un appareillage complexe pour la mesure et pour le calcul.

D'autre part, un certain nombre de pièces mécaniques trop délicates ne peuvent pas être emmanchées par ces dispositifs.

Le procédé selon l'invention entend remédier à ces inconvénients en proposant non pas de mesurer et de contrôler la côte d'emmanchement de manière indirecte par l'intermédiaire du déplacement d'un ou de plusieurs vérins asservis, mais de manière directe par rapport à une surface de référence relative.

Cette surface de référence relative est mobile librement selon la direction de pressage et comporte un système de recopie de sa position selon cette direction. Cette surface de référence n'est mise en mouvement qu'au moment où les pièces à emmancher entrent en contact, sous l'action du ou des vérins asservis.

Selon le premier mode d'utilisation de l'invention, les éléments à emmancher sont agencés par rapport à cette surface de référence de manière à ce que la côte d'emmanchement corresponde exactement à un déplacement très précis de ladite surface de référence sous l'action du vérin.

Selon le second mode d'utilisation de l'invention, cette surface de référence permet en outre de réaliser des emmanchements spéciaux où l'effort, selon la méthode traditionnelle, ne pouvait pas transiter par la surface de pose de la pièce, en permettant l'utilisation d'un gabarit de maintien.

Un autre avantage du procédé selon l'invention est que le vérin peut agir indifféremment sur une pièce ou sur l'autre. En effet, la pièce à emmancher dans l'autre peut être positionnée comme d'habitude juste sous le vérin, mais elle peut aussi éventuellement, surtout si elle est de petite taille, être positionnée sous la surface de référence, sur une butée. Dans ce cas, la surface de référence doit comporter un évidement.

D'autres avantages ressortiront de la description faite ci-après du procédé et du dispositif mettant en oeuvre le procédé :

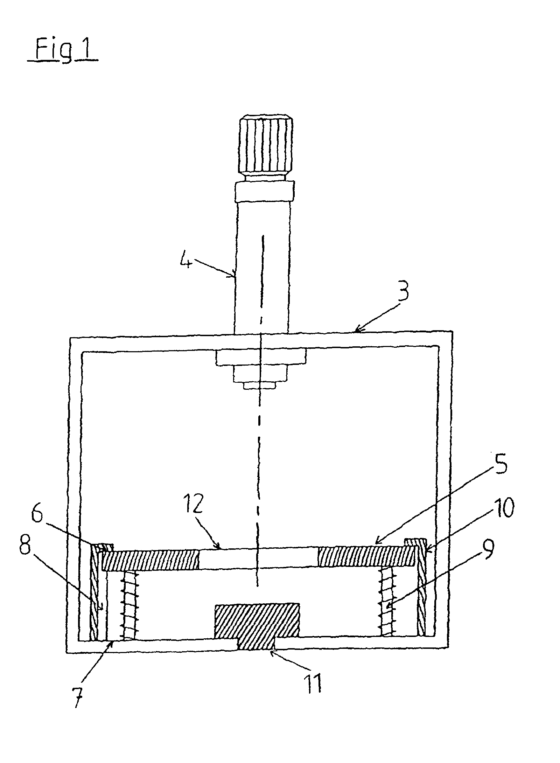

- la figure 1 illustre une vue générale en coupe du dispositif mettant en oeuvre le procédé ;
- les figures 2.1 et 2.2 illustrent deux vues en coupe d'un l'exemple d'emmanchement d'une roue sur un axe, grâce au dispositif mettant en oeuvre le procédé ;
- les figures 3.1 et 3.2 illustrent l'exemple de l'emmanchement d'une petite pièce sur une pièce fragile grâce au dispositif mettant en oeuvre le procédé, et
- la figure 4 illustre une vue d'ensemble d'une version préférée du dispositif mettant en oeuvre le procédé selon l'invention.

Le procédé selon l'invention est un procédé d'emmanchement par pressage vertical de deux pièces (1,2), l'une sur l'autre grâce à une presse (3) munie d'au moins un vérin asservi (4). L'emmanchement permet l'assemblage d'une pièce sur l'autre ou d'une pièce dans l'autre (suivant la forme de la pièce qui subira la poussée directe du vérin asservi).

Le pressage permet de réaliser une côte d'emmanchement L qui correspond à la profondeur d'emmanchement par rapport à une surface (5) de référence unique.

Les autres paramètres sont :
- la cote du jeu B entre la pièce (1 ou 2) et son gabarit de maintien sur la surface (5),
- la cote C de position du nez du vérin (4) avant que l'opération de pressage ne commence et,
- la cote D de position de la seconde pièce (2 ou 1) par rapport à la surface (5), avant que l'opération de pressage ne commence.

On considère que les cotes Let D sont connues et que les cotes B et C sont inconnues.

Selon le procédé, la surface (5) ne subit qu'un effort de pressage faible et maîtrisé.

Selon le procédé, la côte d'emmanchement L n'est pas calculée, réalisée et contrôlée par rapport au déplacement du vérin comme on le fait habituellement, mais exactement par le déplacement X d'une surface (5) encore appelée plateau sur laquelle est positionnée l'une des pièces (1 ou 2). Cette surface (5), située sous le vérin asservi (4) pouvant bouger sous l'action d'un contrainte dans un mouvement de translation verticale libre entre une butée supérieure (6) et une butée inférieure (7). Cette surface (5) constitue une surface de référence lorsqu'elle est en butée supérieure.

La surface (5) est munie d'un système de recopie de sa position (8) selon la direction verticale dont l'origine est constituée par la butée supérieure (6), qui permet de connaître à tout instant la valeur précise de X.

Selon la premier mode de réalisation de l'invention, le déplacement X de la surface (5) par rapport à la butée supérieure (6) est égal, en valeur absolue, à la cote d'emmanchement L, à réaliser sur la première pièce (1 ou 2) par rapport à la butée supérieure (6) que l'on soustrait à la cote D de position de la seconde pièce (2 ou 1) par rapport à la butée supérieure (6) ; la cote D étant calculée avant que l'opération de pressage ne commence.

Selon le second mode de réalisation de l'invention, le mode à décalage d'origine, le vérin (4) et le plateau (5) sont asservis en position, et le déplacement X de la surface (5) par rapport à la butée supérieure (6) est égal, en valeur absolue, à la cote de jeu B entre la pièce (1 ou 2) et son gabarit de maintien sur la surface (5).

De préférence, les valeurs L et D sont intégrées avant le début de l'opération de pressage, et l'opération de pressage ne prend fin que lorsque la surface (5) a atteint la position X.

La surface (5) de référence est maintenue en butée supérieure par des moyens élastiques (9) de type ressorts. Cette position constitue une position de repos.

La surface ne peut effectuer d'autre mouvement que celui de translation verticale car elle est maintenue horizontale par un support (10).

Les moyens élastiques (9) s'opposent donc à ce que la surface (5) descende tant qu'une force suffisante n'est pas appliquée directement ou indirectement dessus et atténuent ainsi l'effort de pressage subit par la surface (5). Le déplacement en translation verticale de la surface (5) ne se fait donc que par le pressage du vérin asservi (4) directement ou indirectement sur la pièce (1 ou 2) positionnée sur la surface (5).

Dans le cas où le vérin asservi (4) agit directement sur la pièce positionnée sur la surface (5), l'autre pièce est alors positionnée sur une butée (11), solidaire du support (10), placée sous la surface (5). Le plateau doit dans ce cas comporter un évidement d'une surface suffisante pour permettre l'assemblage des deux pièces.

De préférence, le système (8) de recopie de la position de la surface (5) par rapport à la butée supérieure (6) est insérée dans le support (10).

Dans une version du dispositif mettant en oeuvre le procédé, le vérin (4) est un vérin électrique qui dispose d'une motorisation et comporte une vis à billes de précision, mais ces éléments ne sont que des organes de pilotage. Le moteur, de très faible puissance et la vis à billes ne fournissent aucun effort, celui-ci étant uniquement assuré par la pression hydraulique. Le moteur pilote une valve qui assure le passage du fluide et la vis à billes n'a qu'une fonction de recopie du déplacement du vérin. C'est elle qui assure la fermeture de la valve lorsque le moteur est parvenu à la position commandée.

Selon une version préférée, le dispositif mettant en oeuvre le procédé selon l'invention comporte un servo-distributeur (24) et un système (27) de recopie de la position du vérin (4). Le servo-distributeur (24) permettant de contrôler exactement la force exercée par le vérin (4) et le système (27) de recopie de position permettant de contrôler exactement la position de ce vérin, on peut dire que le vérin (4) est complètement asservi.

Ce dispositif permet de transmettre des efforts de 50kN et plus avec des précisions de positionnement d'environ 0.01 mm.

Le dispositif comporte en outre :
- un système de contrôle-commande qui permet à la presse de prendre en considération tous les événements nécessaires à l'application des différents emmanchements (capture de cotes à la volée, positionnement, calculs paramètrés) et,
- un système de contrôle d'effort qui permet de valider la qualité de l'emmanchement de chaque pièce réalisée et apporte la possibilité d'effectuer une correction dynamique des déformations du bâti.

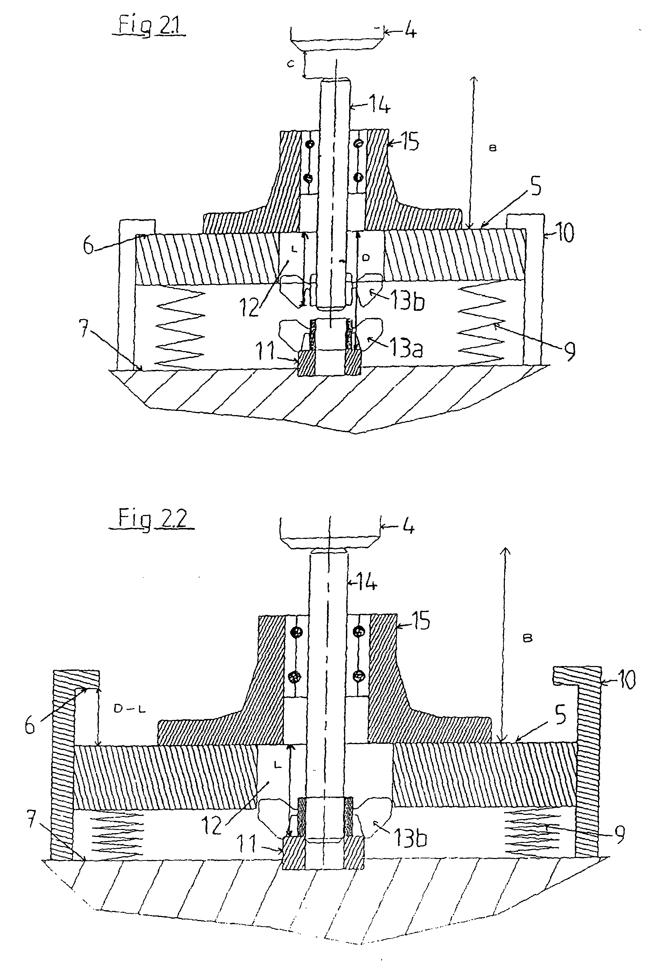

Prenons, pour illustrer le premier mode d'utilisation de l'invention, l'exemple d'une roue (13a) à emmancher sur un axe (14) (cf. figures 2.1 et 2.2).

Une force d'environ 20 kN est nécessaire pour emmancher les deux pièces mais l'opération ne peut être effectuée avec un dispositif traditionnel car les roulements ne supportent pas d'effort supérieur à 400 N.

L'axe (14) est alors positionné sur le plateau (5) grâce au gabarit (15), et la roue (13a) est positionnée sur le support (10) grâce à la butée (11).

Lorsque le vérin (4) viendra en butée contre l'axe (14), sous l'effort, le plateau (5) commencera à se mouvoir, entraîné par le vérin (4). La partie commande de la presse sera informée du déplacement du plateau et fera exécuter à partir de cette information un déplacement de D-L par rapport à sa position de référence, en butée supérieure.

Lorsque le plateau a atteint la position X=D-L, c'est-à-dire lorsque la roue (13b) est emmanchée sur l'axe (14), le vérin (4) se retire et l'on peut commencer un nouveau cycle d'emmanchement.

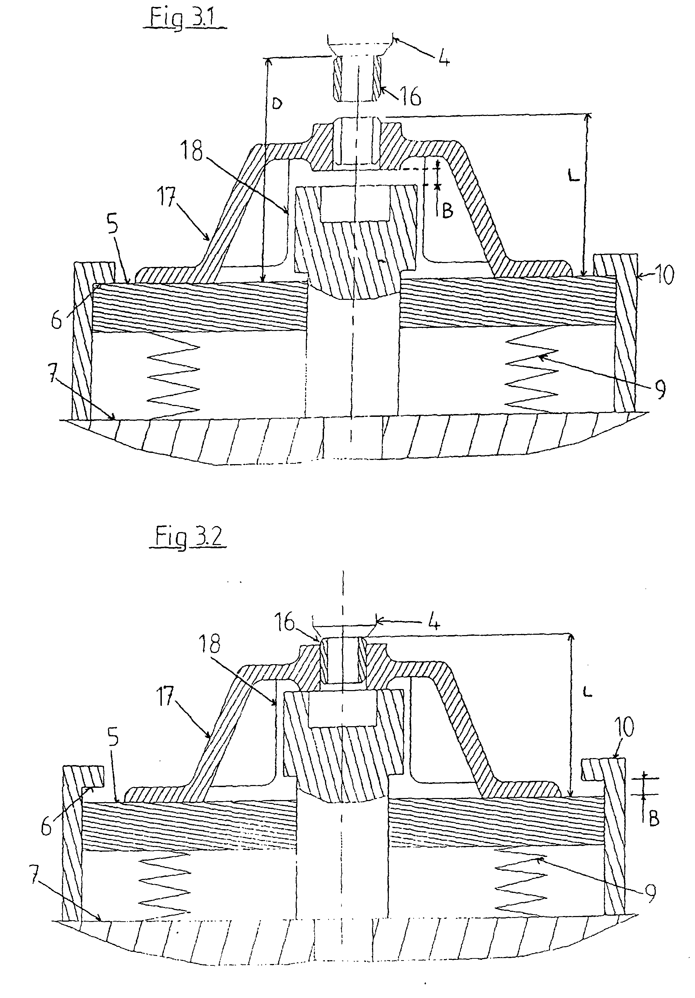

Les figures 3-1 et 3-2 illustrent un exemple d'application du procédé au second mode d'utilisation de l'invention pour l'emmanchement d'une petite pièce (16) sur une pièce fragile (17). Etant donné la forme de la pièce fragile (17), le risque est grand si on utilise un dispositif traditionnel d'emmanchement que cette pièce se rompe.

Selon le procédé, un gabarit de maintien (18) positionné exactement au travers du plateau (5) permet de réaliser l'emmanchement : le gabarit de maintien (18) vient soutenir la pièce (17) afin d'éviter qu'elle ne se déforme à cause de l'effort d'emmanchement.

Lorsque la pièce (16) commencera à s'emmancher dans la pièce fragile (17), sous l'effort, le plateau (5) commencera à se mouvoir. La partie commande de la presse sera informée du déplacement du plateau et fera exécuter, à partir de cette information, un déplacement de B par rapport à sa position de référence en butée supérieure.

Lorsque le plateau a atteint la position X = B, c'est-à-dire lorsque la petite pièce (16) est emmanchée dans la pièce fragile (17), le vérin (4) se retire et l'on peut commencer un nouveau cycle d'emmanchement.

La succession des cycles peut bien sûr être automatisée.

Rappelons ici qu'un travail d'emmanchement doit se faire régulièrement et sans arrêt ni à coups afin de ne pas endommager les pièces. Tous les calculs et les considérations d'entrées sont effectués pendant le temps de cycle de travail de la presse et ceci sans interruption de déplacement.

Ainsi, pour effectuer ce type d'emmanchement, le système de presse nécessite des outillages peu conséquents et le coût d'investissement en outillage lors d'un changement de série est diminué par dix par rapport au coût de l'adaptation d'une presse standard.

La flexibilté de la machine implique une interface de dialogue élaborée : l'opérateur n'effectue jamais de programmation, c'est le système de commande qui interroge régulièrement l'opérateur sur les cotes à réaliser, notamment lors d'un changement de série.

La réduction importante des coûts liés aux outillages en fait un produit bon marché par rapport aux presses existantes. En outre cette presse est évolutive puisqu'elle peut être équipée d'un changeur d'outillage automatique ou d'un chargeur/déchargeur de pièces.

Pour la société, qui ne conçoit que des machines spéciales (à l'unité), le procédé offre la possibilité de proposer un produit polyvalent à la clientèle que ce soit pour l'industrie automobile ou encore pour d'autres secteur comme la construction mécanique ou l'électroménager.

La presse peut être munie de trois outillages différents :
- un outillage supérieur pour la préhension d'une pièce à emmancher et pour assurer la poussée,
- un outillage du plateau pour assurer l'isostatisme de la pièce, et
- un outillage inférieur pour la mise en butée du plateau et pour assurer la pose de pièces à emmancher par le bas.

Etant donné l'interchangeabilité de l'outillage entre chaque application, le système peut aussi contrôler lui-même que l'outillage utilisé est adéquat.

Le dispositif permet d'atteindre une cadence moyenne de 350 pièces par heure, mais la durée du cycle peut être réduite jusqu'à trois secondes.

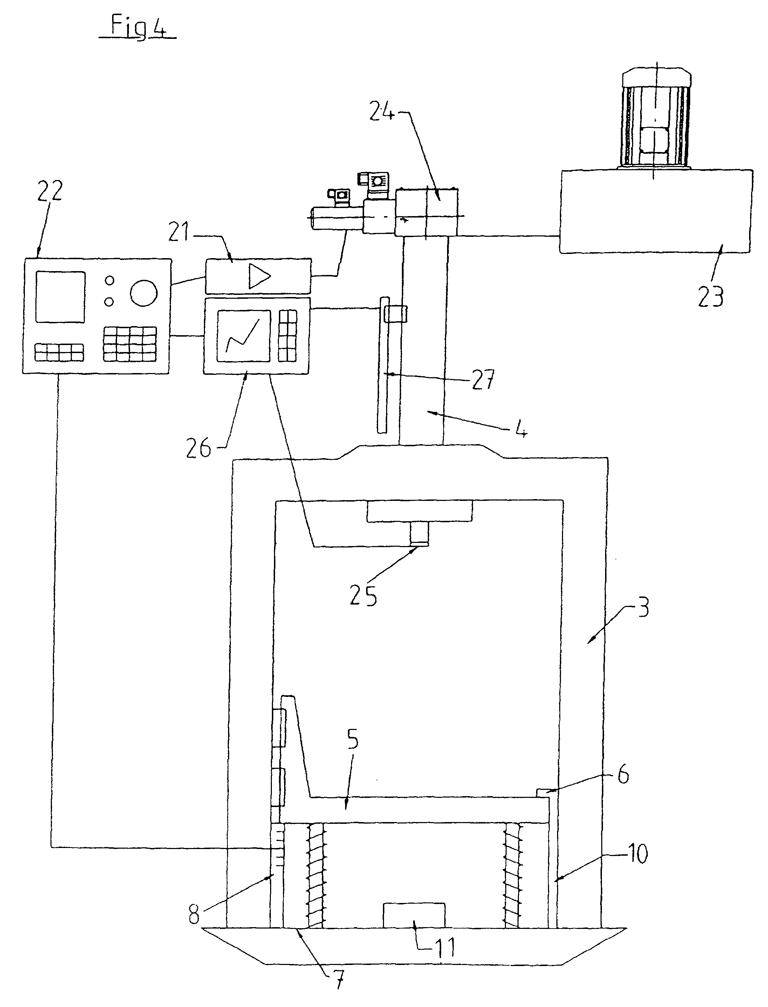

La figure 4 illustre une vue d'ensemble d'une version préférée du dispositif réalisant la mise en oeuvre du procédé. Il comporte un servo-distributeur (24) commandé par un amplificateur (21) lui-même commandé par une commande numérique (22). Une centrale hydraulique (23) alimente en fluide hydraulique lle servo-distributeur (24) et le vérin hydraulique (4). Les informations fournies par le capteur d'effort (25) et le système (27) de recopie de position du vérin (4) sont contrôlées à l'aide du moniteur de contrôle (26). La commande numérique (22) connaît en permanence la position exacte du plateau (5) grâce au système de recopie (8).

Les pièces qui doivent être emmanchées (13,14) et (16,17) doivent être considérées comme des pièces (1,2) à emmancher l'une sur l'autre, ou l'une dans l'autre.

## Revendications

1. Procédé d'emmanchement par presse vertical de deux pièces (13, 14) ou (16, 17) grâce à une presse (3) munie d'au moins un vérin asservi (4) afin d'assembler une pièce dans l'autre et de réaliser ainsi une cote d'emmanchement L par rapport à une surface (5) de référence, **caractérisé en ce qu'**on réalise sur ladite surface (5) de référence un effort de pressage faible et maîtrisé et **en ce que** ladite cote d'emmanchement L est réalisée exactement par contrôle du déplacement X de la surface (5) sur laquelle est positionnée l'une des pièces (13 ou 14), (16 ou 17), la surface (5) étant en translation libre selon la direction verticale entre une butée supérieure (6) et une butée inférieure (7) et constituant une surface de référence lorsqu'elle et en butée supérieure, et **en ce qu'**on réalise le déplacement en translation verticale de la surface (5) par le pressage du vérin asservi (4) directement ou indirectement sur la pièce (13, 14) ou (16, 17) positionnée sur la surface (5).

2. Procédé selon la revendication 1, **caractérisé en ce qu'**on maintient la surface (5) en position de référence par des moyens élastiques (9).

3. Procédé selon la revendication 1 ou la revendication 2, **caractérisé en ce qu'**on recopie la position de la surface (5) par rapport à la butée supérieure (6).

4. Procédé selon l'une quelconque des revendications 1 à 3, **caractérisé en ce que** le déplacement X de la surface (5) par rapport à la butée supérieure (6) est égal, en valeur absolue, à la cote d'emmanchement L à réaliser sur la première pièce (13, 14) ou (16, 17) par rapport à la butée supérieure (8) que l'on soustrait à la cote D de position de la seconde pièce (13, 14) ou (16, 17) par rapport à la butée supérieure (6), la cote D étant calculée avant que l'opération de pressage ne commence.

5. Procédé selon l'une quelconque des revendications 1 à 4, **caractérisé en ce que** le déplacement X de la surface (5) par rapport à la butée supérieure (6) est égal, en valeur absolue, à la cote de jeu B entre la pièce (13 ou 14), (16 ou 17) et son gabarit de maintien sur la surface (5).

6. Procédé selon la revendication 4 ou la revendication 5, **caractérisé en ce que** les valeurs L et D sont intégrées avant le début de l'opération de pressage, et **en ce que** l'opération de pressage ne prend fin que lorsque la surface (5) a atteint la position X.

7. Dispositif réalisant la mise en oeuvre du procédé selon l'une quelconque des revendications 1 à 6, dispositif du type comportant une surface d'appui sur laquelle est positionnée l'une des pièces à emmancher selon une cote L par rapport à une autre pièce, et comportant au moins un vérin apte à exercer directement ou indirectement une poussée sur la pièces positionnée sur la surface d'appui, **caractérisé en ce que** la surface d'appui est déplaçable en translation verticale entre une butée inférieure (7) et une butée supérieure (6) constituant une position de référence et **caractérisé en ce qu'**il comporte un système de copie de la position X de la surface déplaçable permettant à tout instant de connaître la valeur précise de X et donc de la cote d'emmanchement L.

## Patentansprüche

1. Verfahren zur Pressverbindung von zwei Teilen (13, 14) mittels einer Vertikalpresse oder (16, 17) mittels einer Presse (3), die mit mindestens einer geregelten Hubvorrichtung (4) versehen ist, um einen Teil in den anderen Teil zu montieren und so ein Pressverbindungsmaß L bezüglich einer Bezugsfläche (5) festzulegen, **dadurch gekennzeichnet, dass** auf die genannte Bezugsfläche (5) eine geringe und kontrollierte Presskraft einwirkt und dass das genannte Pressverbindungsmaß L durch Steuerung der Verstellung X der Fläche (5) genau festgelegt wird, auf der einer der Teile (13 oder 14), (16 oder 17) angeordnet ist, wobei die Fläche (5) in senkrechter Richtung zwischen einem oberen Anschlag (7) und einem unteren Anschlag (6) frei verschiebbar ist und eine Bezugsfläche bildet, wenn sie am oberen Anschlag anliegt, und dass die Verstellung durch senkrechte Translation der Fläche (5) durch direktes oder indirektes pressen der geregelten Hubvorrichtung (4) auf den auf der Fläche (5) angeordneten Teil (13, 14) oder (16, 17) erfolgt.

2. Verfahren nach Anspruch 1, **dadurch gekennzeichnet, dass** die Fläche (5) in der Bezugslage durch elastische Mittel (9) gehalten wird.

3. Verfahren nach Anspruch 1 oder Anspruch 2, **dadurch gekennzeichnet, dass** die Position der Fläche (5) in Bezug auf den oberen Anschlag (6) kopiert wird.

4. Verfahren nach einem der Ansprüche 1 bis 3, **dadurch gekennzeichnet, dass** die Verstellung X der Fläche (5) bezüglich des oberen Anschlags (6) im Absolutwert dem Pressverbindungsmaß L gleich ist, das auf dem ersten Teil (13, 14) oder (16, 17) in Bezug auf den oberen Anschlag (6) festgelegt wird, das von einem Positionsmaß D des zweiten Teiles (13, 14) oder (16, 17) bezüglich des oberen Anschlags (6) subtrahiert wird, wobei das Maß D berechnet wird, bevor der Pressvorgang beginnt.

5. Verfahren nach einem der Ansprüche 1 bis 4, **dadurch gekennzeichnet, dass** die Verstellung x der Fläche (5) bezüglich des oberen Anschlags (6) im Absolutwert dem Spiel B zwischen dem Teil (13 oder 14), (16 oder 17) und seiner Haltevorrichtung auf der Fläche (5) gleich ist.

6. verfahren nach Anspruch 4 oder Anspruch 5, **dadurch gekennzeichnet, dass** die Werte L und D vor dem Beginn des Pressvorgangs aufgenommen werden und dass der Pressvorgang nicht beendet wird, bevor die Fläche (5) die Position X erreicht hat.

7. Vorrichtung zur Durchführung des Verfahrens nach einem der Ansprüche 1 bis 6, die eine Auflagefläche aufweist, auf der einer der durch Pressen zu verbindenden Teile gemäß einem Maß L bezüglich eines zweiten Teiles angeordnet ist, und die zumindest eine Hubvorrichtung aufweist, die direkt oder indirekt mit einer Schubkraft auf die Teile wirkt, die auf der Auflagefläche angeordnet sind, **dadurch gekennzeichnet, dass** die Auflagefläche in senkrechter Richtung zwischen einem unteren Anschlag (7) und einem oberen Anschlag (6) verstellbar ist und eine Bezugsposition darstellt, und **dadurch gekennzeichnet, dass** die Vorrichtung ein System zum Kopieren der Position X der verstellbaren Fläche umfasst, das jederzeit eine Erkennung des genauen Wertes X und somit des pressverbindungsmaßes L ermöglicht.

## Claims

1. Method of fitting together two parts (13, 14) or (16, 17) by vertical pressure by means of a press (3), which is provided with at least one controlled jack (4) in order to assemble one part in the other and to produce thereby a fitting dimension L relative to a reference surface (5), **characterised in that** a weak and controlled pressing force is exerted on said reference surface (5), and **in that** said fitting dimension L is produced accurately by checking the displacement X of the surface (5), on which one of the parts (13 or 14), (16 or 17) is positioned, the surface (5) being free to move in the vertical direction between an upper stop member (6) and a lower stop member (7) and forming a reference surface when it is at the upper stop member, and **in that** the vertical displacement of the surface (5) is effected by the pressing of the controlled jack (4) directly or indirectly on the part (13, 14) or (16, 17) positioned on the surface (5).

2. Method according to claim 1, **characterised in that** the surface (5) is retained in the reference position by resilient means (9).

3. Method according to claim 1 or claim 2, **characterised in that** the position of the surface (5) relative to the upper stop member (6) is replicated.

4. Method according to any of claims 1 to 3, **characterised in that** the displacement X of the surface (5) relative to the upper stop member (6) is equal, in absolute value, to the fitting dimension L to be used on the first part (13, 14) or (16, 17) relative to the upper stop member (8*), which is subtracted from the position dimension D of the second part (13, 14) or (16, 17) relative to the upper stop member (6), the dimension D being calculated prior to the start of the pressing operation.

5. Method according to any of claims I to 4, **characterised in that** the displacement X of the surface (5) relative to the upper stop member (6) is equal, in absolute value, to the clearance dimension B between the part (13 or 14), (16 or 17) and its retention gauge on the surface (5).

6. Method according to claim 4 or claim 5, **characterised in that** the values L and D are integrated prior to the start of the pressing operation, and **in that** the pressing operation only finishes when the surface (5) has reached the position X.

7. Apparatus for carrying out the method according to any of claims I to 6, said apparatus being of the type which comprises a support surface, on which is positioned one of the parts to be fitted at a dimension L relative to another part, and it comprises at least one jack capable of exerting propulsion, directly or indirectly, on the part positioned on the support surface, **characterised in that** the support surface is vertically displaceable between a lower stop member (7) and an upper stop member (6) forming a reference position, and **characterised in that** it comprises a system for copying the position X of the displaceable surface, permitting the precise value of X, and hence of the fitting dimension L, to be known at any moment.
